# EUROPEAN PATENT APPLICATION

(11) **EP 2 941 961 A1**
(43) Date of publication of application: **11.11.2015**
(21) Application number: 14167768.2
(22) Date of filing: 09.05.2014
(51) Int. Cl.: A23G 1/00, A23G 1/08

(54) **Press and method of separating fat containing mass into liquid fat and cake**

(71) Applicant: Royal Duyvis Wiener B.V., 1541 KD Koog aan de Zaan (NL)
(72) Inventor: VAN KAMPEN, Theodorus Jacobus, 1617 VS Westwoud (NL)
(74) Representative: De Vries & Metman

(57) **Abstract**

The invention relates to a press (1) for separating fat containing mass, e.g. cocoa mass, into liquid fat and cake, comprising a frame (2), a plurality of pressing elements (6) disposed in the frame (2), a gutter (17) for transporting the liquid fat, and a conveyor (15) for receiving the cakes, positioned beneath the pressing elements (6). At least one collector (20) for the liquid fat, which collector (20) is movable between at least two positions, a first position beneath the pressing elements (6) to collect the liquid fat flowing from the pressing elements (6) during pressing and to transport the liquid fat to the gutter (17) and a second position to allow cakes (16) to fall past it and into the conveyor (15).

## Description

The present invention relates to a press for separating fat containing mass, e.g. cocoa mass, into liquid fat and cake, comprising a frame, a plurality of pressing elements disposed in the frame, a gutter for transporting the liquid fat, and a conveyor for receiving the cakes, which conveyor is positioned beneath the pressing elements. The invention further relates to a method of separating fat containing mass into liquid fat and cake.

A cocoa press generally comprises a hydraulic cylinder which is connected with a retainer by means of two parallel tie rods. The cylinder accommodates a plunger and between said plunger and the retainer are disposed a plurality of pressing elements. Each of the pressing elements comprises a so-called pot, which defines a (usually circle-cylindrical) cavity, and a squeezer, also known as counter pot or male pot, and typically two filters, one on each side (seen in axial direction) of the cavity.

During a cycle, the pressing elements are filled with cocoa mass via supply lines (inlets) and the cocoa mass is subsequently compressed. As a result, the cocoa butter is pressed through the filters and discharged. When a sufficient or pre-selected amount of butter has been pressed from the cocoa mass, the pressure is released and the press is returned to its starting position. At that position, the pots are pushed (or pulled) over the squeezers, and the cocoa cakes fall out. Finally, the pots are returned to the starting position and the cycle is complete.

Various cocoa presses have been made available by companies such as Duyvis, Nagema/Heidenau, Carle Montanari, and Bauermeister.

DE 3734976 relates to a "Press for pressing chocolate liquor (cocoa mass), comprising: - a multiplicity of tanks (V) arranged in a row which determine the particular feed amounts of the chocolate liquor to be pressed, - apparatuses (6) for reducing these amounts during the pressing operation by the release of cocoa butter until cocoa oil cakes (press cakes) are obtained and until the tanks (V) are opened during the following unloading phase with subsequent fall of the oil cakes from the tanks (V) along a principally vertically running path, and - collection apparatuses (9) for the oil cakes lying beneath the tanks (V), - and a protective shield (10) mounted beneath the tanks (V) and above the collection apparatuses (9) for the oil cakes; this protective shield (10) being movable at least by a part (13) between a position matching the principally vertical path which is used during the pressing phase and a position of detachment from the principally vertical path during the unloading phase, in order to enable the fall of the oil cakes from the tanks (V) onto the collection apparatuses (9)."

In practice, the protective shield requires frequent cleaning and thus downtime of the press.

It is an object of the present invention to provide an improved press.

To this end, the press according to the invention is characterised by at least one collector for the liquid fat, which collector is movable between at least two positions, a first position beneath the pressing elements to collect the liquid fat flowing from the pressing elements during pressing and to transport the liquid fat to the gutter and a second position to allow cakes to fall past it and into the conveyor.

Thus, all or most of the liquid fat obtained during pressing flows over the collector. As a result, formation of solid deposits is reduced or avoided and the collector requires less cleaning than e.g. a protective shield.

In an embodiment, the collector comprises at least one plate that is slidable or rotable between the at least two positions. In a further embodiment, the collector comprises two plates and may comprise a corresponding number of gutters for transporting the liquid fat. Such plates require relatively little space, are efficacious, and allow relatively straightforward movement between the first and second positions.

In another embodiment, to provide an effective and repeatable seal from liquid fat, in the first position, the leading edge of one of the plates extends over the leading edge of the other plate. In a refinement, the (sealing) edges of the plates are provided with flanges, e.g. upright flanges.

In other embodiments, the at least one plate is sloping, preferably at an angle in a range from 5° to 60°, preferably in a range from 10° to 40°, and/or the at least one plate is provided with one or more stiffening folds or reinforcing elements.

In a further embodiment, the outlets of the pressing elements are located above the conveyor and above the collector at least when it is in the first position.

In other embodiments, the number of pressing elements is in a range from 10 to 26, preferably in a range from 16 to 24, and/or the press comprises a hydraulic cylinder and plunger for exerting pressure on the pressing elements and/or at least one, preferably all of the pressing elements comprise a pot having a cavity for receiving mass to be pressed, a squeezer located at least partially in the cavity, and filters disposed in front of the squeezer and on the side of the cavity opposite the squeezer.

The invention further relates to a method of separating fat containing mass, e.g. cocoa mass, into liquid fat and cake, by means of a press according to the preamble and characterised in that the liquid fat, preferably at least 80%, preferably at least 90% of the liquid fat flowing from the pressing elements during pressing is collected beneath the pressing elements and transported to at least one gutter. In an embodiment, the liquid fat flowing from the pressing elements during pressing is collected on at least one plate that is cyclically positioned beneath the pressing elements.

The embodiments of the press as presented above apply also to the method.

Within the framework of the present invention, the term "fat" refers to any fats and oils in a mass that can be separated by means of an hydraulic press. In an embodiment, the mass is cocoa mass containing butter, which is liquid at typical cocoa mass pressing temperatures, and cocoa solids, typically leaving the press as cakes in the shape of discs.

The invention will now be explained in more detail with reference to the drawings, which show an example of a hydraulic cocoa press according to the invention.
Figure 1 is a perspective view of a hydraulic cocoa press according to the invention.
Figures 2A and 2B are cross-sectional front views of the press according to Figure 1.
Figures 3A and 3B are perspective views of butter collector plates as used in the press according to Figure 1.
Figures 4A and 4B are front views of the butter collector plates shown in Figures 3A and 3B.

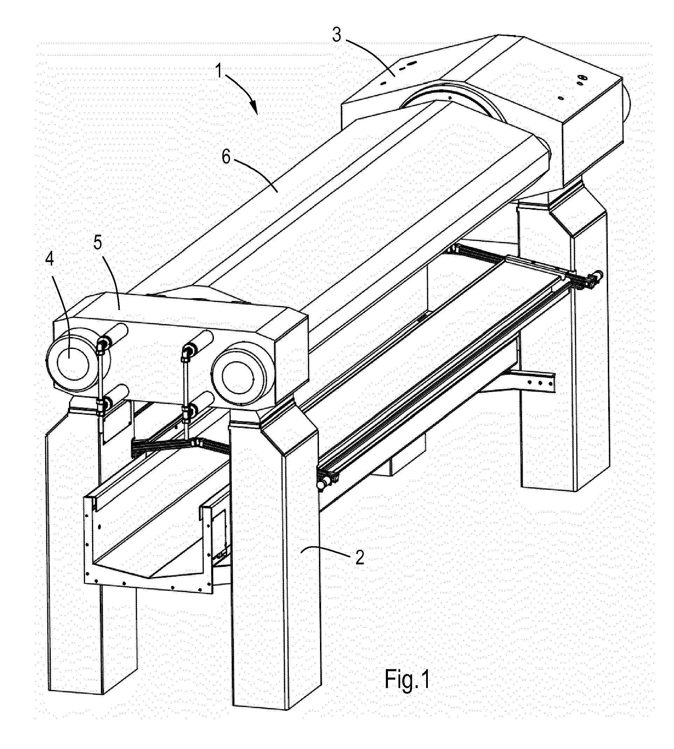

Figure 1 shows a hydraulic cocoa press 1 comprising a frame 2 and a hydraulic cylinder 3, two parallel tie rods 4, and a retainer 5 mounted in the frame 2. A number of pressing elements 6, e.g. sixteen or eighteen, is located between the cylinder 3 and the retainer 5.

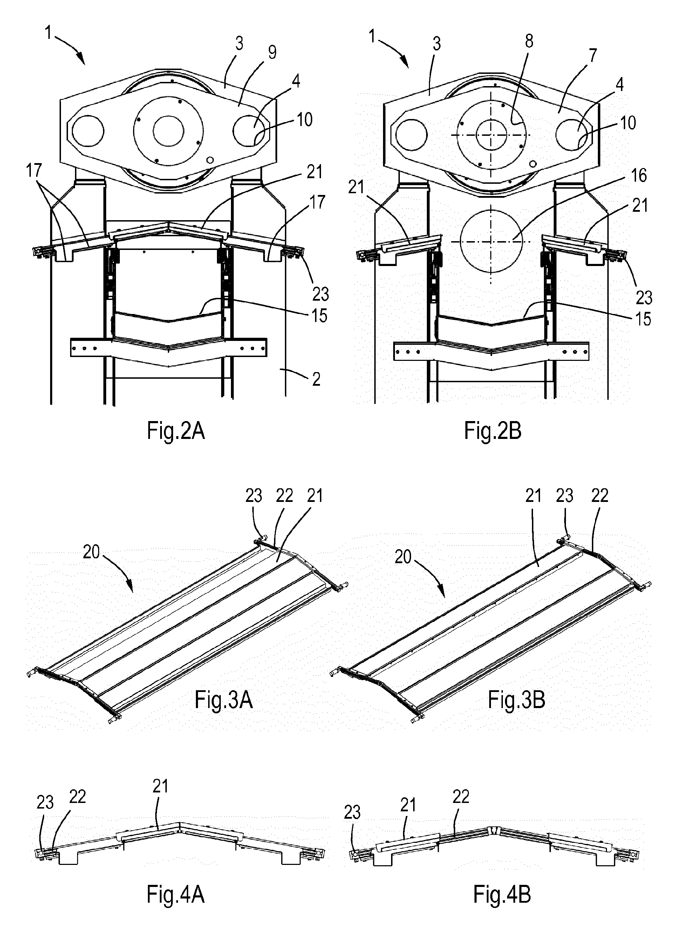

Each of the pressing elements 6, shown in more detail in Figures 2A and 2B, comprises a pot 7 having a cylindrical cavity 8 for receiving cocoa mass to be pressed, and a squeezer 9, also known as counter pot or male pot, sealingly positioned in the cavity 8. The pots 7 as well as the squeezers 9 are slidingly mounted round the tie rods 4 by means of circular openings 10, which are formed in the side portions of the pots 7 and the squeezers 9.

The cavity 8 is limited on both sides (in axial direction) by a disc-shaped filter, e.g. a filter cloth or metal mesh known in itself, mounted on a filter plate. One filter plate is attached to the squeezer, whereas the other filter plate is attached to the back of a squeezer which forms part of an adjoining pressing element.

The pots include inlets (not shown; known per se) for the cocoa mass, whilst the squeezers 9 include outlets for discharging cocoa butter that has been pressed through the filters 11. In this example, the outlets are located in the lower part of the squeezers 9.

A conveyor 15 for receiving the cocoa cakes 16 is positioned beneath the pressing elements 6 and smaller gutters 17 for transporting the liquid butter are positioned on either side of the conveyor. A collector 20 for the liquid cocoa butter is positioned in between the pressing elements 6 and the conveyor 15. In this example, the collector comprises two sloping plates 21 that are slidably mounted on linear guides 22 that are located at the ends of the plates. Each of the plates is movable by means of actuators, e.g. pneumatic cylinders or electric motors 23 e.g. in combination with pulleys and a (toothed) belt, between at least two positions, a first position (Figures 2A, 3A, 4A) beneath the pressing elements to collect the liquid cocoa butter from the pressing elements and to transport the butter to the gutters 17 and a second position (Figures 2B, 3B, 4B) to allow cakes 16 to fall past it and into the conveyor 15.

Further, in this example, the leading edge of one of the plates 21 extends over the leading edge of the other plate 21.

During operation, the cavities of the cocoa press are filled with cocoa mass and, once filled, the pressing elements are compressed evenly by moving the plunger of the hydraulic cylinder towards the retainer. As a result, butter is pressed through the filters, flows from the outlets, onto and over the collector plates and into the gutters. When a sufficient amount of butter has been pressed from the cocoa mass, the pressure is released and the press is returned to its starting position. At that position, the pots are pushed (or pulled) over the squeezers, and the cocoa cakes fall out (Figure 2B). Finally, the pots are returned to the starting position and the cycle is complete.

The cyclical flow of liquid butter over the plates prevents or reduces deposits forming on the plates.

The invention is not limited to the embodiment as described above, which can be varied in several ways within the scope of the claims, of course. Thus, the press can also be used for products of which the pressing and filtration behaviour is comparable to that of cocoa mass.

## Claims

1. Press (1) for separating fat containing mass, e.g. cocoa mass, into liquid fat and cake, comprising a frame (2), a plurality of pressing elements (6) disposed in the frame (2), a gutter (17) for transporting the liquid fat, and a conveyor (15) for receiving the cakes, positioned beneath the pressing elements (6), **characterised by** at least one collector (20) for the liquid fat, which collector (20) is movable between at least two positions, a first position beneath the pressing elements (6) to collect the liquid fat flowing from the pressing elements (6) during pressing and to transport the liquid fat to the gutter (17) and a second position to allow cakes (16) to fall past it and into the conveyor (15).

2. Press (1) according to claim 1, wherein the collector (20) comprises at least one plate (21) that is slidable or rotable between the at least two positions.

3. Press (1) according to claim 2, wherein the collector (20) comprises two plates (21) and preferably a corresponding number of gutters (17) for transporting the liquid fat.

4. Press (1) according to claim 3, wherein in the first position, the leading edge of one of the plates (21) extends over the leading edge of the other plate (21).

5. Press (1) according to any one of the claims 2-4, wherein the at least one plate (21) is sloping, preferably at an angle in a range from 5° to 60°, preferably 10° to 40°.

6. Press (1) according to any one of the claims 2-5, wherein the at least one plate (21) is provided with one or more stiffening folds or reinforcing elements.

7. Press (1) according to any one of the preceding claims, wherein the collector (20) is slidably mounted on a plurality of guides (22).

8. Press (1) according to claim 7, wherein the guides (22) are located at or near the ends of the collector (20).

9. Press (1) according to any one of the preceding claims, wherein the outlets of the pressing elements (6) are located above the conveyor (15) and above the collector (20) at least when it is in the first position.

10. Press (1) according to any one of the preceding claims, wherein the number of pressing elements (6) is in a range from 10 to 26, preferably in a range from 16 to 24.

11. Press according to any one of the preceding claims, comprising a hydraulic cylinder and plunger (3) for exerting pressure on the pressing elements (6).

12. Press according to any one of the preceding claims, wherein at least one, preferably all of the pressing elements (6) comprise a pot (7) having a cavity (8) for receiving mass to be pressed, a squeezer (9) located at least partially in the cavity (8), and filters (11) disposed in front of the squeezer (9) and on the side of the cavity (8) opposite the squeezer (9).

13. Method of separating fat containing mass, e.g. cocoa mass, into liquid fat and cake, by means of a press (1) according to the preamble of claim 1 and **characterised in that** the liquid fat flowing from the pressing elements (6) during pressing is collected beneath the pressing elements (6) and transported to at least one gutter (17).

14. Method according to claim 13, wherein at least 80% of the liquid fat flowing from the pressing elements (6) during pressing is collected beneath the pressing elements (6) and, from there, transported to the at least one gutter (17).

15. Method according to claim 13 or 14, wherein the liquid fat flowing from the pressing elements (6) during pressing is collected on at least one plate (21) that is cyclically positioned beneath the pressing elements (6).
